(19) Europäisches Patentamt
European Patent Office
Office européen des brevets

(11) Publication number: 0 282 292 B1

(12) # EUROPEAN PATENT SPECIFICATION

(45) Date of publication of patent specification: **29.04.92**

(51) Int. Cl.[5]: **C09K 3/10**

(21) Application number: **88302068.7**

(22) Date of filing: **10.03.88**

(54) **Improved chelator for anaerobic sealants.**

(30) Priority: **12.03.87 IE 643/87**

(43) Date of publication of application:
**14.09.88 Bulletin 88/37**

(45) Publication of the grant of the patent:
**29.04.92 Bulletin 92/18**

(84) Designated Contracting States:
**DE FR GB IT SE**

(56) References cited:
**GB-A- 1 347 068**
**GB-A- 2 045 781**

(73) Proprietor: **LOCTITE (IRELAND) Ltd.**
**Whitestown Industrial Estate**
**Tallaght, Co. Dublin 24(IE)**

(72) Inventor: **Leonard, Raymond G.**
**11 Cedarwood**
**Castletown Cellbridge Co. Kildare(IE)**
Inventor: **Brennan, Martin C.**
**40 Landsdowne Park**
**Templeogue Dublin 16(IE)**

(74) Representative: **Marchant, James Ian et al**
**Elkington and Fife Prospect House 8 Pembroke Road**
**Sevenoaks, Kent TN13 1XR(GB)**

EP 0 282 292 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an improved metal ion chelator for use in anaerobic sealants or adhesives. In particular the chelator of the present invention is suitable for counteracting copper contamination in fast-curing acrylate ester sealant formulations having as an accelerator 1-acetyl-2-phenylhydrazine (US Patent No. 4,180,640). Such adhesives contain latent accelerators of free radical polymerization which can lead to spurious polymerization in the bottle or elsewhere, prior to the time of intended use. It has been hypothesized that much of the unpredictability inherent in anaerobic compositions is due to metal contamination in the starting materials, or acquired during processing.

To overcome this problem the use of chelators in anaerobic sealants was suggested in U.S. Patent No. 4038 475 (Frauenglass & Werber).

The chelator which is currently used in anaerobic sealants is ethylenediaminetetraacetic acid tetrasodium salt or EDTA $Na_4$:-

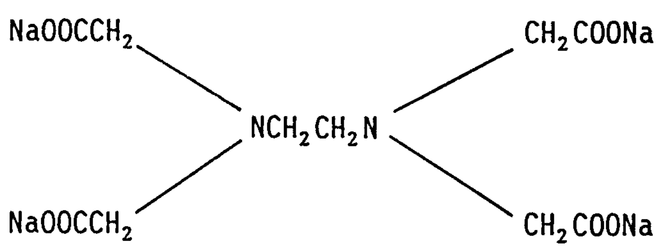

This chelator is very effective when used under appropriate conditions. However, the disadvantage with EDTA $Na_4$ is that it is precipitated from solution within about 24 hrs of addition due to its reaction with acidic components of the sealant formulation to produce acid analogues. In particular the tetraacid which may be formed shows a decreasing solubility with decreasing pH. This means that the added EDTA $Na_4$ is no longer able to act as a chelator to counteract trace metal contamination, and particulate material originating from the EDTA tetrasodium is formed in the sealant.

An object of the present invention is to provide a metal ion chelator for use in anaerobic sealants which is soluble in anaerobic sealant compositions, which can effectively chelate and deactivate contaminating metals and which does not seriously interfere with the cure profile of the sealant.

According to the present invention there is provided an anaerobic sealant composition containing N-hydroxyethylenediaminetriacetic acid trisodium salt (HEDTA $Na_3$) as a chelating agent. The HEDTA $Na_3$ should be present in an effective amount to act as a chelator. Preferably the sealant composition comprises between 1 and 1000 ppm of N-hydroxyethylenediaminetriacetic acid trisodium salt, a particularly preferred range being between 25 and 500 ppm.

Anaerobic sealant compositions are mixtures of polymerizable acrylate ester monomers and peroxy polymerization initiators therefor. Preferably at least a portion of the acrylate monomer is a di- or other polyacrylate ester. Suitable polyacrylate ester monomers are di-, tri-and tetraethyleneglycol dimethacrylate; dipropyleneglycol dimethacrylate; polyethyleneglycol dimethacrylate; polypropyleneglycol dimethyacrylate; di(pentamethyleneglycol) dimethacrylate; tetraethyleneglycol diacrylate; tetraethyleneglycol di-(chloracrylate); diglycerol diacrylate; diglycerol tetramethacrylate; tetramethylene dimethacrylate; ethylene dimethacrylate; butyleneglycol dimethacrylate; neopentylglycol diacrylate; and trimethylolpropane triacrylate.

Monofunctional acrylate esters (esters containing one acrylate group) may also be used in anaerobic sealants, and preferably the esters are those with a relatively polar alcoholic moiety. Typical examples of compounds within this category are cyclohexylmethacrylate; tetrahydrofurfuryl methacrylate; hydroxethyl acrylate; hydroxypropyl methacrylate; t-butylaminoethyl methacrylate; cyanoethylacrylate and choroethyl methacrylate.

Another class of polyacrylate ester monomers utilized in anaerobic sealant compositions are the isocyanatemonoacrylate reaction products described in U.S. Patent No. 3424988 of Toback and Gorman, issued 4th February 1969.

The success of HEDTA $Na_3$ in meeting the objects of the invention could not have been predicted. The inventors have screened over thirty commercially available chelating agents in an attempt to find one which meets the above defined requirements for use in an anaerobically curable sealant.

Solubility Test

To test the solubility of potential chelators, model solutions of (a) polyethylene glycol dimethacrylate (PEGMA) containing 3% saccharin, and (b) polyethylene glycol dimethacrylate (PEGMA) containing 1% maleic acid were used. The chelator was added with stirring to the model solution to a level of 500 ppm and was heated to 55 ° C to aid dissolution, and then allowed to cool. The resulting mixture was filtered and any insoluble material collected on the filter paper was analysed by infra-red spectroscopy (IR). As shown in Table 1, fifteen of the chelators out of thirty one failed this solubility test, while twelve of the remaining sixteen caused rapid discolouration and polymerization of the model solution.

TABLE 1

| CHELATOR TESTED | FORM | SOLUBLE | PREMATURE POLYMERIZATION | CURE PROFILE |
|---|---|---|---|---|
| Tetrakis(2-hydroxypropyl) ethylenediamine | - | Y* | N | Nil |
| Ethylene glycol Bis (-2-aminoethylether)N,N'N" N"'Tetraacetic Acid | Sodium Salt | Y | Y | - |
| Diethylenetriaminepenta-acetic acid | Sodium Salt | Y* | N | - |
| N-hydroxyethylethylene-diaminetriacetic Acid | Sodium Salt | Y* | - | - |
| (Trimethoxysilylpropyl) ethylenediaminetriacetic Acid | Acid Form | N | - | - |
| 1,2-Diaminocyclohexane-tetraacetic Acid | Acid Form | N | - | - |
| ᵔiaminotriethyldiether-tetraacetic Acid | Acid Form | N | - | - |
| 1,2 Propylenediamine-tetraacetic Acid | Acid Form | N | - | - |
| N-(2-Hydroxyethyl)-iminodiacetic Acid | Acid Form | Y | Y | - |
| N,N-Bis(hydroxyethyl) Glycine | - | Y | Y | - |
| Diethylene Triamine | - | Y | Y | - |

TABLE 1 (CONTD)

| CHELATOR TESTED | FORM | SOLUBLE | PREMATURE POLYMERIZATION | CURE PROFILE |
|---|---|---|---|---|
| Ethylenediaminetetraacetic Acid | Sodium Salt | Y* | N | - |
| Tri-N-Butylphosphate | - | N | - | - |
| DiBenzyldithiocarbamate | Zinc Salt | Y | Y | - |
| 1-Hydroxy-2-Naphthylazo-6-nitro(2-Naphthol-4-Sulphonic Acid) | - | N | - | - |
| 2-Hydroxy-5-Methylbenzoazo-(2-Naphthol-4-Sulphonic Acid) | - | N | - | - |
| 1-(2-Pyridylazo)-2-Naphtol | - | N | - | - |
| Pyridine-2-carboxaldehyde-ethylenediamine | - | Y | Y | - |
| 6-methyl-pyridine-2-carboxaldehyde-ethylene-diamine | - | N | - | - |
| DH LIX 64(Dihydroxyphenolic Oxime) Henkel Proprietary Product | - | Y | Y | - |
| LIX 64N (Phenolic Oxime) Henkel Proprietary Product | - | Y | Y | - |
| LIX 63 (Aliphatic-&-Hydroxyoxime) Henkel Proprietary Product | - | Y | Y | - |

TABLE 1 (CONTD)

| CHELATOR TESTED | FORM | SOLUBLE | PREMATURE POLYMERIZATION | CURE PROFILE |
|---|---|---|---|---|
| Ammonium-1-pyrrolidine-dithiocarbamate | - | Y | Y | - |
| Ethylenediaminetetrakis (Methylene Phosphonic Acid) | Ammonium Salt | N | - | - |
| Hydroxyethylene-1,1-Diphosphonic Acid Salts | Sodium & Ammonium | N | - | - |
| Nitrilo-Tris (Methylene-phosphonic Acid) | Sodium Salt | N | - | - |
| Diethylenetriamine Pentakis (Methylenephosphonic Acid | Potassium Salt | N | - | - |
| Triethylenetetraamine Hexakis (Methylenephosphonic Acid) | Potassium Salt | N | - | - |
| 1-Hydroxyethylidene-1,1-Diphosphonic Acid | Sodium Salt | N | - | - |
| Methacryloxyethyl Phosphate | - | Y | Y(+0.5ppmCu) | - |
| Bis(methacryloxyethyl) Phosphate | - | Y | Y(+0.5ppmCu) | - |

*carried forward to more stringent solubility testing

The chelators identified above as Henkel Proprietary products are available commercially from Henkel Corporation, Minerals Industry Division, 1844, West Grant Road, Tuscon, Arizona, USA.

The remaining four chelators which passed the solubility test were again tested in the model solution and this time the concentration of the chelator was quantified by titrimetric analysis as a function of time elapsed since addition. The first of these was EDTA $Na_4$ described above. The other three are N-hydroxyethylenediaminetriacetic acid trisodium salt (HEDTA $Na_3$) of formula:-

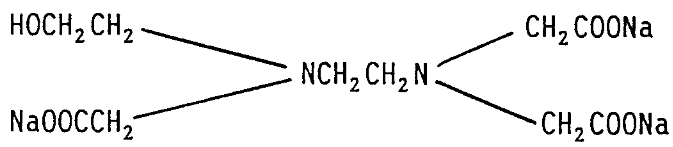

ethylenediaminetetra (propyl alcohol) or tetrakis-(2-hydroxy-propyl)-ethylenediamine (EDTPA) of formula:-

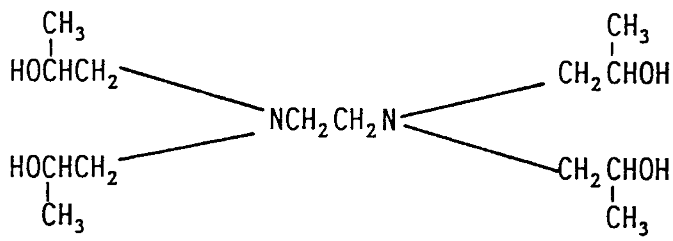

and diethylenetriaminepentaacetic acid pentasodium salt (DTPA $Na_5$):-

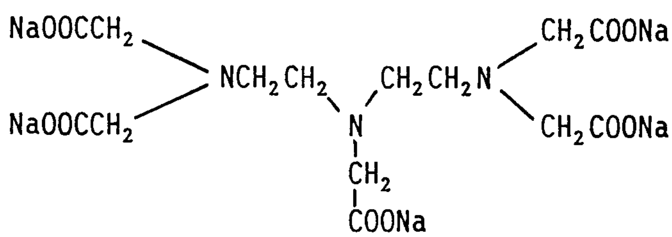

All of these chelators are commercially available.

The results of this test are given in Table 2.

TABLE 2

| Solubility of Ethylene Diamine Type Chelators in PEGMA/Acid Solution | | | | | | | | |
|---|---|---|---|---|---|---|---|---|
| Sample/Treatment | 3% Saccharin in PEGMA | | | | 1% Maleic Acid in PEGMA | | | |
| | EDTA $Na_4$ | DTPA $Na_5$ | HEDTA $Na_3$ | EDTPA | EDTA $Na_4$ | DTPA $Na_5$ | HEDTA $Na_3$ | EDTPA |
| Added ppm | 636 | 739 | 963 | 600 | 636 | 739 | 963 | 600 |
| Stirred 0.5hr. mixture sampled | 608 | 650 | 904 | 604 | 636 | 739 | 826 | 610 |
| Sampled after 0.5hr. standing-supernatant liquid taken | 14 | 14 | 65 | 590 | 19 | 0 | 110 | 602 |
| As above after 4 days standing | 34 | 15 | 69 | 590 | 27 | 30 | 175 | 610 |
| As above after 5 days standing | 34 | 25 | 75 | 595 | 42 | 25 | 180 | 596 |

Table 2 shows that EDTA $Na_4$ and DTPA $Na_5$ have a very low solubility in the model formulation whereas HEDTA $Na_3$ and EDTPA have a greater solubility, particularly EDTPA. Therefore, only HEDTA $Na_3$ and EDTPA, along with EDTA $Na_4$ as a control were tested in the next stage.

STABILITY OF SOLUBLE CHELATORS WITH OR WITHOUT ADDED COPPER.

A sensitive curable system based on the following formulation was prepared and subdivided to give a series of solutions with differing concentrations of the relevant chelators (as detailed in Table 3):-

| | |
|---|---|
| Polyethylene glycol dimethacrylate | 96.88% |
| Cumene hydroperoxide | 0.60% |
| 1-acetyl-2-phenyl-hydrazine | 0.30% |
| Benzoic suphimide | 1.15% |
| Maleic Acid | 1.00% |
| 1,4 Naphthoquinone | 0.01% |
| Chelator* | 0.05%* |

NOTE*: Chelator used was selected from Table 3 with 0.05% representing upper level utilized.

A standard 80 x 100 mm glass tube was half filled with the anaerobic composition containing the chelator under test and placed in a metal heat-block at 82° C. The time taken to the first gellation was noted and used as a measure of stability of the composition.

Experience with similar formulations has shown that a formulation which remains stable for longer than 3 hours at 82°C should have a lifetime (i.e. it should remain liquid in the non-cured form) exceeding 12 months at ambient temperature.

TABLE 3

COMPARISON OF STABILITIES OF EDPTA, HEDTA $Na_3$, AND EDTA $Na_4$

| ppm Chelator | EDTPA Fresh | EDTPA Aged | HEDTA $Na_3$ Fresh | HEDTA $Na_3$ Aged | EDTA $Na_4$ Fresh | EDTA $Na_4$ Aged |
|---|---|---|---|---|---|---|
| No Copper Added | | | | | | |
| 500 | 3 hrs+ | 3 hrs+ | 3 hrs+ | 3 hrs+ | 3 hrs+ | 3 hrs+ |
| 400 | 3 hrs+ | 3 hrs+ | 3 hrs+ | 3 hrs+ | 3 hrs+ | 3 hrs+ |
| 300 | 3 hrs+ | 3 hrs+ | 3 hrs+ | 3 hrs+ | 3 hrs+ | 3 hrs+ |
| 200 | 3 hrs+ | 3 hrs+ | 3 hrs+ | 3 hrs+ | 3 hrs+ | 3 hrs+ |
| 100 | 3 hrs+ | 3 hrs+ | 3 hrs+ | 3 hrs+ | 3 hrs+ | 3 hrs+ |
| 50 | 3 hrs+ | 3 hrs+ | 3 hrs+ | 3 hrs+ | 3 hrs+ | 3 hrs+ |

TABLE 3 (CONTD)

COMPARISON OF STABILITIES OF EDPTA, HEDTA $Na_3$, AND EDTA $Na_4$

| ppm Chelator | EDTPA Fresh | EDTPA Aged | HEDTA $Na_3$ Fresh | HEDTA $Na_3$ Aged | EDTA $Na_4$ Fresh | EDTA $Na_4$ Aged |
|---|---|---|---|---|---|---|
| 0.5ppm Copper added to each solution | | | | | | |
| 500 | 3 hrs+ | 3 hrs+ | 3 hrs+ | 3 hrs+ | 3 hrs+ | failed |
| 400 | 3 hrs+ | 3 hrs+ | 3 hrs+ | 3 hrs+ | 3 hrs+ | failed |
| 300 | 3 hrs+ | 3 hrs+ | 3 hrs+ | 3 hrs+ | 3 hrs+ | failed |
| 200 | failed | failed | 3 hrs+ | failed | 3 hrs+ | failed |
| 100 | failed | failed | failed | failed | 3 hrs+ | failed |
| 50 | failed | failed | failed | failed | 3 hrs+ | failed |

The stabilities in Table 3 are an average of three determinations and were tested when fresh and after standing for one week at room temperature (of which only the supernatant liquid was tested). These stabilities show that all formulations were similar, whichseems to indicate that these chelators do not interfere with the chemistry of the cure system.

However, in Table 4 the formulations were "spiked" with copper when fresh and after one week at room temperature. (In the case of solutions aged for one week, only the supernatant was tested). The fresh formulation containing EDTA $Na_4$ showed excellent stability down to 50 ppm while the week old samples

failed in all cases. A similar trial in which the supernatant liquid was tested 24 hrs after the addition of the chelator yielded similar results, i.e. the supernatant liquid ex EDTA $Na_4$ formulation gelled rapidly on addition of copper (0.5 ppm).

The EDTPA and HEDTA $Na_3$ showed similar stabilities to EDTA $Na_4$ when fresh, but there was no loss of chelation efficiency on aging. Therefore, HEDTA $Na_3$ and EDTPA appear to offer a significant improvement in the retention of chelating capability on aging.

Fixture Time Test

Table 4 shows that in the case of HEDTA $Na_3$ and EDTPA, 300 ppm of chelator was able to counteract 0.5 ppm of added copper. A series of formulations were therefore prepared, with and without copper, with a level of 200 ppm HEDTA $Na_3$ and EDPTA and curespeed was determined using standard M10 degreased black oxide nuts and bolts. A thin coating of the anaerobic sealant formulation was applied to the nuts and bolts and these were assembled. At the intervals shown in Table 5 they were checked for fixture strength using an electronic torque tension analyser. All tests were carried out in triplicate with five nuts and bolts per test.

Experience has shown that the strength obtained after standing for 1 and 2h enables the speed of cure to be assesed in relative terms i.e. comparison of modified and standard formulations. The strength obtained after 24h is a measure of the ultimate strength to be expected from such a formulation.

TABLE 5

1 Hour Test

| | | No Copper Added | +0.5ppm Copper |
|---|---|---|---|
| EDTA $Na_4$ | 500 | 175 | 170 |
| | 400 | 168 | 168 |
| | 300 | 165 | 175 |
| | 200 | 177 | 178 |
| EDTPA | 500 | No Cure | No Cure |
| | 400 | No Cure | No Cure |
| | 300 | No Cure | No Cure |
| | 200 | No Cure | No Cure |
| HEDTA $Na_3$ | 500 | No Cure | No Cure |
| | 400 | No Cure | No Cure |
| | 300 | 80 KgN/cm | 60 KgN/cm |
| | 200 | 166 KgN/cm | 170 KgN/cm |
| No Chelator | - | 173 KgN/cm | |

TABLE 6

2 Hour Cure Speed Test

| | | No Copper Added | +0.5ppm Copper |
|---|---|---|---|
| EDTA $Na_4$ | 500 | 180 KgN/cm | 175 KgN/cm |
| | 400 | 185 KgN/cm | 190 KgN/cm |
| | 300 | 185 KgN/cm | 190 KgN/cm |
| | 200 | 190 KgN/cm | 195 KgN/cm |
| EDTPA | 500 | No Cure | No Cure |
| | 400 | No Cure | No Cure |
| | 300 | No Cure | No Cure |
| | 200 | 66 KgN/cm | 51 KgN/cm |
| | 100 | 80 KgN/cm | 75 KgN/cm |
| HEDTA $Na_3$ | 500 | No Cure | No Cure |
| | 400 | No Cure | No Cure |
| | 300 | 85 KgN/cm | 90 KgN/cm |
| | 200 | 166 KgN/cm | 171 KgN/cm |

24 Hour Cure Speed Test

| | | No Copper Added | +0.5ppm Copper |
|---|---|---|---|
| EDTA $Na_4$ | 500 | 240 KgN/cm | 255 KgN/cm |
| | 400 | 260 KgN/cm | 260 KgN/cm |
| | 300 | 265 KgN/cm | 255 KgN/cm |
| | 200 | 265 KgN/cm | 270 KgN/cm |
| EDTPA | 500 | No Cure | No Cure |
| | 400 | No Cure | No Cure |
| | 300 | No Cure | 14 KgN/cm |
| | 200 | 70 KgN/cm | 57 KgN/cm |
| | 100 | 195 KgN/cm | 186 KgN/cm |
| HEDTA $Na_3$ | 500 | No Cure | No Cure |
| | 400 | No Cure | No Cure |
| | 300 | 100 KgN/cm | 125 KgN/cm |
| | 200 | 185 KgN/cm | 195 KgN/cm |

The cure speed profiles reveal that EDTPA has a detrimental effect on cure speeds, even at levels as low as 200 ppm, whereas HEDTA $Na_3$ retains speed of cure when compared to EDTA $Na_4$ at about 200 ppm.

EDTPA is therefore unsuitable for use as a chelator in anaerobic sealants whereas HEDTA $Na_3$ has been shown to be a much superior chelator to EDTA $Na_4$ in such formulations.

## Claims

1. An anaerobic sealant composition containing N-hydroxyethylenediaminetriacetic acid trisodium salt (HEDTA $Na_3$) as a chelating agent.

2. An anaerobic sealant composition as claimed in claim 1 which comprises between 1 and 1000 ppm N-hydroxyethylenediaminetriacetic acid trisodium salt.

3. An anaerobic sealant composition as claimed in claim 2 which comprises between 25 and 500 ppm N-hydroxyethylenediaminetriacetic acid trisodium salt.

## Revendications

1. Une composition d'étanchéité anaérobie contenant le sel trisodique de l'acide N-hydroxyéthylènediaminetriacétique (HEDTA-$Na_3$) comme agent chélateur.

2. Une composition d'étanchéité anaérobie telle que revendiquée dans la revendication 1, qui comprend 1 à 1000 ppm de sel trisodique d'acide N-hydroxyéthylènediaminetriacétique.

3. Une composition d'étanchéité anaérobie telle que revendiquée dans la revendication 2, qui comprend 25 à 500 ppm de sel trisodique d'acide N-hydroxyéthylènediamine-triacétique.

## Patentansprüche

1. Anaerobe Dichtungsmasse, enthaltend N-Hydroxyethylendiamintriessigsäure-trinatriumsalz (HEDTA $Na_3$) als ein Chelierungsmittel.

2. Anaerobe Dichtungsmasse nach Anspruch 1, die zwischen 1 und 1000 ppm N-Hydroxyethylendiamintriessigsäuretrinatriumsalz enthält.

3. Anaerobe Dichtungsmasse nach Anspruch 2, die zwischen 25 und 500 ppm N-Hydroxyethylendiamintriessigsäuretrinatriumsalz enthält.